# EUROPEAN PATENT APPLICATION

(11) **EP 4 404 079 A1**
(43) Date of publication of application: **24.07.2024**
(21) Application number: 23219992.7
(22) Date of filing: 22.12.2023
(51) Int. Cl.: G06F 16/28, G06F 16/332

(54) **AUXILIARY DATA PRESENTATION METHOD FOR VISUALIZATION CHART, DATA PRESENTATION APPARATUS, AND MEDIUM**

(30) Priority: 20.01.2023 CN 202310094417
(71) Applicant: NIO Software Technology (Shanghai) Co., Ltd., Shanghai (CN)
(72) Inventor: ZHANG, Qian, Shanghai (CN); XU, Haixia, Shanghai (CN)
(74) Representative: Vossius & Partner Patentanwälte Rechtsanwälte mbB

(57) **Abstract**

The disclosure relates to the technical field of data presentation of charts, and specifically provides an auxiliary data presentation method for a visualization chart, a data presentation apparatus, and a medium, with the intention of solving the problem of being unable to obtain accurate data from charts. For this purpose, an auxiliary data presentation method for a visualization chart according to the disclosure includes the following steps: determining a data point to be analyzed in a target visualization chart, the data point to be analyzed including a floating data point and/or at least one marked data point; and presenting data information for each data point to be analyzed in a first data presentation area, where the first data presentation area and the target visualization chart are in a same interactive interface. Presenting, in the first data presentation area, the data information for the data point to be analyzed in the determined target visualization chart enables dual-channel presentation of the data point to be analyzed, by means of visualization and data using the target visualization chart and the first data presentation area.

## Description

The present application claims priority of CN patent application 202310094417.8 filed on January 20, 2023 with the title "Auxiliary data presentation method for visualization chart, data presentation apparatus and medium".

### Technical Field

The disclosure relates to the technical field of data presentation of charts, and specifically provides an auxiliary data presentation method for a visualization chart, a data presentation apparatus, and a medium.

### Background Art

With the widespread use of charts, a large amount of data is presented in the form of charts.

The following problem commonly exists in the application of charts in the prior art:
Data presented in a chart is limited, and specific data cannot be accurately obtained from the chart. When an anomaly occurs in the data, specific data at the anomaly cannot be obtained directly from the chart. This leads to an inability to promptly troubleshoot the cause of the problem, delaying the handling of the anomaly, and resulting in low maintenance efficiency.

Accordingly, there is a need for a new auxiliary data presentation solution for a visualization chart to solve the problem described above.

### Summary

To overcome the defect described above, the disclosure is proposed to provide an auxiliary data presentation method for a visualization chart, which solves or at least partially solves the technical problem of being unable to obtain accurate data from charts.

In a first aspect, the disclosure provides an auxiliary data presentation method for a visualization chart, including the following steps: determining a data point to be analyzed in a target visualization chart, the data point to be analyzed including a floating data point and/or at least one marked data point; and presenting data information for each data point to be analyzed in a first data presentation area, where the first data presentation area and the target visualization chart are in a same interactive interface.

In a technical solution of the foregoing auxiliary data analysis method for a visualization chart, the method further includes: in response to the data point to be analyzed including a floating data point, simultaneously presenting data information for the floating data point in the first data presentation area and a second data presentation area, where the data information presented in the second data presentation area has fewer dimensions than the data information presented in the first data presentation area; and the second data presentation area follows the floating data point and floats over the target visualization chart.

In a technical solution of the foregoing auxiliary data analysis method for a visualization chart, the determining at least one data point to be analyzed in a target visualization chart includes: in response to a user locating a point in the target visualization chart by means of a cursor, determining the point located by the user as the floating data point; and/or in response to a user locating and clicking a point in the target visualization chart by means of a cursor, determining the point clicked by the user as the marked data point.

In a technical solution of the foregoing auxiliary data analysis method for a visualization chart, the presenting data information for each data point to be analyzed in a first data presentation area includes: in response to the data point to be analyzed including the marked data point, presenting data information for each marked data point in a first sub-area of the first data presentation area; and in response to the data point to be analyzed including the floating data point, presenting data information for the floating data point in a second sub-area of the first data presentation area.

In a technical solution of the foregoing auxiliary data analysis method for a visualization chart, the method further includes: in response to the user locating and clicking the point in the target visualization chart by means of the cursor, generating a point position identifier in the target visualization chart at a location of the cursor, to represent the marked data point clicked by the user; and establishing a linkage between the point position identifier and the first data presentation area, such that the point position identifier and the first data presentation area change together.

In a technical solution of the foregoing auxiliary data analysis method for a visualization chart, the method further includes: if any point position identifier is deleted or modified, synchronously deleting or modifying data information for the marked data point represented by the point position identifier in the first data presentation area; and if data information of all dimensions of any marked data point in the first data presentation area is deleted, synchronously deleting the point position identifier representing the marked data point in the target visualization chart.

In a technical solution of the foregoing auxiliary data analysis method for a visualization chart, the method further includes: if there are a plurality of point position identifiers in the target visualization chart and the plurality of point position identifiers are scattered, providing a general view of the plurality of point position identifiers through a homing line function.

In a technical solution of the foregoing auxiliary data analysis method for a visualization chart, the method further includes: the interactive interface including a visualization chart area configured to display at least one visualization chart; and when the target visualization chart is determined from the visualization chart displayed in the visualization chart area, generating the floating first data presentation area in the visualization chart area, where the floating first data presentation area does not cover the target visualization chart.

In a second aspect, the disclosure provides a data presentation apparatus. The data presentation apparatus includes a processor and a storage apparatus adapted to store a plurality of program codes, where the program codes are adapted to be loaded and executed by the processor to perform the auxiliary data presentation method for a visualization chart in any one of the technical solutions of the foregoing auxiliary data presentation method for a visualization chart.

In a third aspect, a computer-readable storage medium is provided. The computer-readable storage medium stores a plurality of program codes, where the program codes are adapted to be loaded and executed by a processor to perform the auxiliary data presentation method for a visualization chart in any one of the technical solutions of the foregoing auxiliary data presentation method for a visualization chart.

The above one or more technical solutions of the disclosure have at least one or more of the following beneficial effects: Presenting, in the first data presentation area, the data information for the data point to be analyzed in the determined target visualization chart enables dual-channel presentation of the data point to be analyzed, by means of visualization and data using the target visualization chart and the first data presentation area, which solves the problem of being unable to obtain specific data from charts in the prior art.

Further, in the technical solution for implementing the disclosure, a part of the data information for the floating data point is presented in the second data presentation area floating over the visualization chart, which extends a presentation range of the data information for the floating data point.

Further, in the technical solution for implementing the disclosure, the point position identifier is generated to represent the marked data point clicked by the user, and the linkage between the point position identifier and the first data presentation area is established, which enables linked presentation of the data information for the marked data point represented by the point position identifier, and makes it convenient for the user to perform comparative analysis on a plurality of marked data points presented in the first data presentation area based on the data information for the plurality of marked data points.

Further, in the technical solution for implementing the disclosure, the target visualization chart is determined from the at least one visualization chart in the visualization chart area, and the floating first data presentation area does not cover the target visualization chart, which enables intuitive dual-channel presentation of the data point to be analyzed in the target visualization chart by means of visualization and data, and improves the efficiency of the user's comparative analysis of a plurality of data points to be analyzed through the dual-channel presentation.

Further, in the technical solution for implementing the disclosure, when the marked data points represented by the plurality of point position identifiers in the target visualization chart are scattered, a general view of the marked data points represented by the plurality of point position identifiers in the target visualization chart is provided for display through the homing line function, and specific positions of the marked data points can be accurately obtained, which reduces the time consumed in separately searching for the specific positions of the marked data points, and improves the efficiency of the user's analysis of the visualization chart.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic flowchart of main steps of an auxiliary data presentation method for a visualization chart according to an embodiment of the disclosure;
FIG. 2 is a flowchart of detailed steps of generating a point position identifier in an auxiliary data presentation method for a visualization chart according to an embodiment of the disclosure; and
FIG. 3 is a block diagram of a main structure of a data presentation apparatus configured to perform an auxiliary data analysis method for a visualization chart according to the disclosure.

### List of reference signs:

300: data presentation apparatus; 301: processor; 302: storage apparatus; 303: program code.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

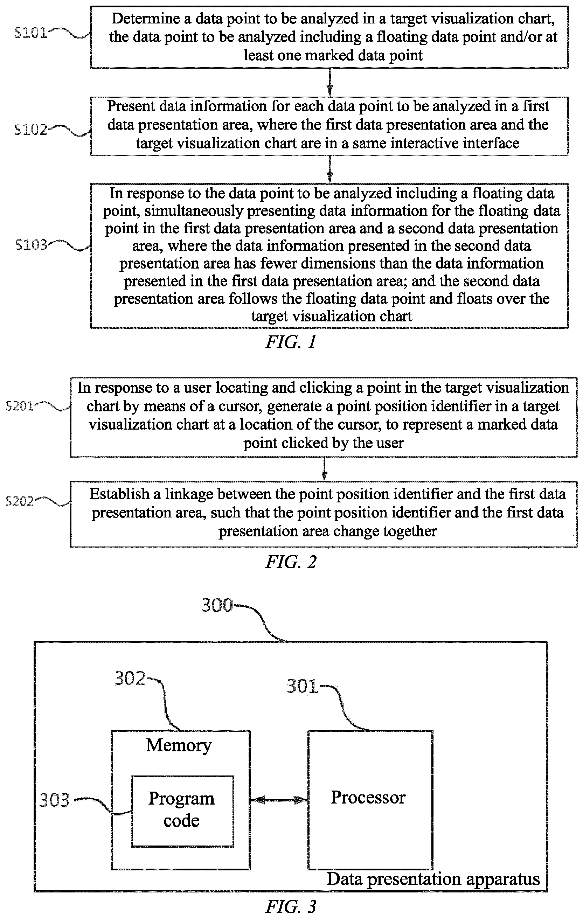

Referring to FIG. 1, FIG. 1 is a flowchart of main steps of an auxiliary data presentation method for a visualization chart according to an embodiment of the disclosure. As shown in FIG. 1, the auxiliary data presentation method for a visualization chart in this embodiment of the disclosure mainly includes step S 101 to step S 103 below.

In step S 101, a data point to be analyzed in a target visualization chart is determined, the data point to be analyzed including a floating data point and/or at least one marked data point.

Specifically, in some embodiments, the determining at least one data point to be analyzed in a target visualization chart includes: in response to a user locating a point in the target visualization chart by means of a cursor, determining the point located by the user as the floating data point; and/or in response to a user locating and clicking a point in the target visualization chart by means of a cursor, determining the point clicked by the user as the marked data point.

In step S102, data information for each data point to be analyzed is presented in a first data presentation area, where the first data presentation area and the target visualization chart are in a same interactive interface.

Specifically, in some embodiments, the presenting data information for each data point to be analyzed in a first data presentation area includes: in response to the data point to be analyzed including the marked data point, presenting data information for each marked data point in a first sub-area of the first data presentation area; and in response to the data point to be analyzed including the floating data point, presenting data information for the floating data point in a second sub-area of the first data presentation area.

In the above embodiment, presenting, in the first data presentation area, the data information for the data point to be analyzed in the determined target visualization chart enables dual-channel presentation of the data point to be analyzed, by means of visualization and data using the target visualization chart and the first data presentation area, which solves the problem of being unable to obtain specific data from charts in the prior art.

In step S 103, in response to the data point to be analyzed including a floating data point, data information for the floating data point is simultaneously presented in the first data presentation area and a second data presentation area, where the data information presented in the second data presentation area has fewer dimensions than the data information presented in the first data presentation area; and the second data presentation area follows the floating data point and floats over the target visualization chart.

Specifically, in this embodiment, the dimension of the data information presented in the second data presentation area may include a time dimension; and the dimension of the data information in the first data presentation area may include a plurality of dimensions including a time dimension, such as a vehicle speed dimension, a vehicle status dimension, a voltage dimension, and a current dimension. The dimensions of the second data presentation area and the first data presentation area herein are only illustrative. In actual testing, those skilled in the art can make choices according to actual requirements. For example, some important information about the current data point may be presented for the second data presentation area, which is not described herein in detail.

In the above embodiment, a part of the data information for the floating data point is presented in the second data presentation area floating over the visualization chart, which extends a presentation range of the data information for the floating data point. Presenting the data information having fewer dimensions in the second data presentation area along with the floating point can make it convenient for the user to locate a data point in the target visualization chart, and presenting the data information having more dimensions of the floating point in the first data presentation area can make it convenient for the user to determine whether the floating point should be marked, which can effectively improve the efficiency of the user's data analysis.

In some embodiments, the interactive interface includes a visualization chart area configured to display at least one visualization chart; and when the target visualization chart is determined from the visualization chart displayed in the visualization chart area, the floating first data presentation area is generated in the visualization chart area, and the floating first data presentation area does not cover the target visualization chart.

In the above embodiment, the target visualization chart is determined from the at least one visualization chart in the visualization chart area, and the floating first data presentation area does not cover the target visualization chart, which enables intuitive dual-channel presentation of the data point to be analyzed in the target visualization chart by means of visualization and data, and improves the efficiency of the user's comparative analysis of a plurality of data points to be analyzed through the dual-channel presentation.

Referring to FIG. 2, FIG. 2 is a flowchart of detailed steps of generating a point position identifier in an auxiliary data presentation method for a visualization chart according to an embodiment of the disclosure. As shown in FIG. 2, the generation of a point position identifier in this embodiment of the disclosure mainly includes the following steps S201 and S202.

In step S201, in response to the user locating and clicking the point in the target visualization chart by means of the cursor, a point position identifier is generated in the target visualization chart at a location of the cursor, to represent the marked data point clicked by the user.

In step S202, a linkage between the point position identifier and the first data presentation area is established, such that the point position identifier and the first data presentation area change together.

Specifically, in some embodiments, if any point position identifier is deleted or modified, data information for the marked data point represented by the point position identifier is synchronously deleted or modified in the first data presentation area; and if data information of all dimensions of any marked data point in the first data presentation area is deleted, the point position identifier representing the marked data point is synchronously deleted in the target visualization chart.

In the above embodiment, the point position identifier is generated to represent the marked data point clicked by the user, and the linkage between the point position identifier and the first data presentation area is established, which enables linked presentation of the data information for the marked data point represented by the point position identifier, and makes it convenient for the user to perform comparative analysis on a plurality of marked data points presented in the first data presentation area based on the data information for the plurality of marked data points.

In some embodiments, the first data presentation area may be a floating window data list, or may be another graphical presentation area or another form of presentation area that can display multi-dimensional content, as long as the multi-dimensional information can be simultaneously displayed and change together with the point position identifier. The second data presentation area may be a hoverbox, or may be another graphical presentation area or another form of presentation area that can display content in some dimensions, as long as the information in some dimensions can be displayed. Details are not described herein.

Step S202 is further described below by using an example in which a floating window data list is used as the first data presentation area and a hoverbox is used as the second data presentation area.

In some embodiments, the linkage between the point position identifier and the floating window data list may be set such that if the point position identifier is deleted or modified, the data information for the marked data point represented by the point position identifier in the floating window data list is synchronously deleted or modified; and if data information of all dimensions of the marked data point in the floating window data list is deleted, the point position identifier representing the marked data point is synchronously deleted in the target visualization chart.

In some embodiments, the linkage between the point position identifier and the floating window data list may be set such that after the linkage between the point position identifier and the floating window data list is established, data in the floating window data list is in an editable display state, that is, the display of data in each dimension in the floating window data list can be deleted or modified. If information in some dimensions of the marked data point represented by the point position identifier in the chart is deleted, the point position identifier is not deleted; and if information in all dimensions of the marked data point represented by the point position identifier in the chart is deleted, the point position identifier is deleted synchronously.

In some embodiments, the linkage between the point position identifier and the floating window data list may be set such that when a new point position identifier is added, data information for a marked data point corresponding to the new point position identifier is obtained, the data information corresponding to the new point position identifier is added to the existing floating window data list, and a linkage is established between the data information that is added to the floating window data list and that corresponds to the new point position identifier and the newly added point position identifier.

In some embodiments, the linkage between the point position identifier and the floating window data list may be set such that if all point position identifiers in the target visualization chart are deleted or modified, data information for marked data points in the floating window data list that are represented by the deleted point position identifiers is also synchronously deleted or modified; and
if the data information for all the marked data points in the floating window data list is deleted, all point position identifiers in the target visualization chart that represent the marked data points are synchronously deleted.

If the point position identifier is deleted, a data point in the target visualization chart that corresponds to the marked data point represented by the point position identifier is not deleted, and the linkage between each data point in the target visualization chart and the hoverbox and/or the floating window data list is not deleted; and if the data information for the marked data point in the floating window data list is deleted, the data information corresponding to the data point to be analyzed in the target visualization chart that corresponds to the marked data point is not deleted.

Further, in some embodiments, the visualization chart may be provided with a homing line function, so that if there are a plurality of point position identifiers in the target visualization chart and the plurality of point position identifiers are scattered, a general view of the plurality of point position identifiers is provided through the homing line function.

Specifically, in some embodiments, providing a general view of position information of marked data points represented by the plurality of point position identifiers through the homing line function includes the following steps:
based on the plurality of point position identifiers, constructing a marked segment between the multiple point position identifiers;
selecting the marked segment; and
automatically adjusting an existing scale of the visualization chart based on the marked segment, to provide a general view of the position information of the marked data points represented by the plurality of point position identifiers corresponding to the marked segment.

In the above embodiment, when the marked data points represented by the plurality of point position identifiers in the target visualization chart are scattered, a general view of the marked data points represented by the plurality of point position identifiers in the target visualization chart is provided for display through the homing line function, and specific positions of the marked data points can be accurately obtained, which reduces the time consumed in separately searching for the specific positions of the marked data points, and improves the efficiency of the user's analysis of the visualization chart.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program code, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, as shown in FIG. 3, the disclosure further provides a data presentation apparatus. In an embodiment of the data presentation apparatus according to the disclosure, the data presentation apparatus 300 includes a processor 301 and a storage apparatus 302. The storage apparatus 302 may be configured to store a program for performing the map updating method of the foregoing method embodiments. The processor 301 may be configured to execute program code 303 in the storage apparatus, where the program code 303 includes, but is not limited to, the program code 303 for performing the auxiliary data presentation method for a visualization chart of the foregoing method embodiments. For ease of description, only parts related to the embodiments of the disclosure are shown. For specific technical details that are not disclosed, reference may be made to the method part of the embodiments of the disclosure.

The data presentation apparatus in this embodiment of the disclosure may be a data presentation apparatus formed by various electronic devices. In some possible implementations, the data presentation apparatus may include a plurality of storage apparatuses 302 and a plurality of processors 301. The program code 303 for performing the auxiliary data presentation method for a visualization chart of the above method embodiments may be divided into a plurality of subprogram codes, and each subprogram code may be loaded and executed by the processor 301 to perform different steps of the auxiliary data presentation method for a visualization chart of the above method embodiments. Specifically, each subprogram code may be stored separately in a different storage apparatus 302, and each processor 301 may be configured to execute a program in one or more storage apparatuses 302 to jointly implement the auxiliary data presentation method for a visualization chart in the above method embodiments. In other words, each processor 301 separately performs different steps of the auxiliary data presentation method for a visualization chart in the above method embodiments to jointly implement the auxiliary data presentation method for a visualization chart in the above method embodiments.

The plurality of processors 301 may be processors 301 deployed on a same device. For example, the foregoing data presentation apparatus may be a high-performance data presentation apparatus including a plurality of processors 301, and the plurality of processors 301 may be processors 301 configured on the high-performance data presentation apparatus. Alternatively, the plurality of processors 301 may be processors 301 deployed on different devices. For example, the foregoing data presentation apparatus may be a server cluster, and the plurality of processors 301 may be processors 301 on different servers in the server cluster.

Further, the disclosure further provides a computer-readable storage medium. In an embodiment of the computer-readable storage medium according to the disclosure, the computer-readable storage medium may be configured to store a program for performing the auxiliary data presentation method for a visualization chart in the foregoing method embodiments, and the program may be loaded and executed by a processor to implement the foregoing auxiliary data presentation method for a visualization chart. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. An auxiliary data presentation method for a visualization chart, comprising the following steps:
determining a data point to be analyzed in a target visualization chart, the data point to be analyzed comprising a floating data point and/or at least one marked data point; and
presenting data information for each data point to be analyzed in a first data presentation area, wherein
the first data presentation area and the target visualization chart are in a same interactive interface.

2. The auxiliary data presentation method for a visualization chart according to claim 1, further comprising:
in response to the data point to be analyzed comprising a floating data point, simultaneously presenting data information for the floating data point in the first data presentation area and a second data presentation area, wherein
the data information presented in the second data presentation area has fewer dimensions than the data information presented in the first data presentation area; and
the second data presentation area follows the floating data point and floats over the target visualization chart.

3. The auxiliary data presentation method for a visualization chart according to claim 1 or 2, wherein the determining at least one data point to be analyzed in a target visualization chart comprises:
in response to a user locating a point in the target visualization chart by means of a cursor, determining the point located by the user as the floating data point; and/or
in response to a user locating and clicking a point in the target visualization chart by means of a cursor, determining the point clicked by the user as the marked data point.

4. The auxiliary data presentation method for a visualization chart according to any one of claims 1 to 3, wherein the presenting data information for each data point to be analyzed in a first data presentation area comprises:
in response to the data point to be analyzed comprising the marked data point, presenting data information for each marked data point in a first sub-area of the first data presentation area; and
in response to the data point to be analyzed comprising the floating data point, presenting data information for the floating data point in a second sub-area of the first data presentation area.

5. The auxiliary data presentation method for a visualization chart according to claim 3, further comprising:
in response to the user locating and clicking the point in the target visualization chart by means of the cursor, generating a point position identifier in the target visualization chart at a location of the cursor, to represent the marked data point clicked by the user; and
establishing a linkage between the point position identifier and the first data presentation area, such that the point position identifier and the first data presentation area change together.

6. The auxiliary data presentation method for a visualization chart according to claim 5, further comprising:
if any point position identifier is deleted or modified, synchronously deleting or modifying data information for the marked data point represented by the point position identifier in the first data presentation area; and
if data information of all dimensions of any marked data point in the first data presentation area is deleted, synchronously deleting the point position identifier representing the marked data point in the target visualization chart.

7. The auxiliary data presentation method for a visualization chart according to claim 5 or 6, further comprising: if there are a plurality of point position identifiers in the target visualization chart and the plurality of point position identifiers are scattered, providing a general view of the plurality of point position identifiers through a homing line function.

8. The auxiliary data presentation method for a visualization chart according to any one of claims 1 to 7, further comprising:
the interactive interface comprising a visualization chart area configured to display at least one visualization chart; and
when the target visualization chart is determined from the visualization chart displayed in the visualization chart area, generating the floating first data presentation area in the visualization chart area, wherein the floating first data presentation area does not cover the target visualization chart.

9. A data presentation apparatus, comprising a processor and a storage apparatus adapted to store a plurality of program codes, wherein the program codes are adapted to be loaded and executed by the processor to perform the auxiliary data presentation method for a visualization chart according to any one of claims 1 to 8.

10. A computer-readable storage medium storing a plurality of program codes, wherein the program codes are adapted to be loaded and executed by a processor to perform the auxiliary data presentation method for a visualization chart according to any one of claims 1 to 8.
